# EUROPEAN PATENT APPLICATION

(11) **EP 2 905 556 A1**
(43) Date of publication of application: **12.08.2015**
(21) Application number: 13834914.7
(22) Date of filing: 03.09.2013
(51) Int. Cl.: F24J 2/12, F24J 2/54

(54) **STRUCTURE FOR A DISH-TYPE POINT-BASED SOLAR CONCENTRATION SYSTEM, AND CONCENTRATION SYSTEM INCLUDING SAID STRUCTURE**

(30) Priority: 07.09.2012 ES 201231396
(71) Applicant: Abengoa Solar New Technologies, S.A., 41014 Sevilla (ES)
(72) Inventor: MUÑOZ GILABERT, Felix, E-41014 Sevilla (ES); GOMEZ VERGARA, Gonzalo, E-41014 Sevilla (ES); SOSA NARANJO, Cristina, E-41014 Sevilla (ES); JIMENEZ LOPEZ, Antonio Abad, E-41014 Sevilla (ES); BRAVO VERA, Antonio José, E-41014 Sevilla (ES)
(74) Representative: Pons Ariño, Angel
(86) International application number: PCT/ES2013/070614
(87) International publication number: WO 2014/037599

(57) **Abstract**

It is lighter and easier to assemble. It comprises a) an anchoring sub-structure (10) for anchoring to the ground; b) a tracking sub-structure (20), mounted on the anchoring sub-structure (10) and such that it can rotate about an azimuth axis; c) a driving sub-structure (30) comprising two coaxial hoops (31) formed by a plurality of assembled stamped segments (33), said hoops (31) being joined by tie-rods (32); the driving sub-structure (30) being capable of elevation rotation in relation to the tracking sub-structure (20); d) a supporting sub-structure (50), in the form of a cradle, designed to support a reflective surface; and e) a modular connection sub-structure (40), manufactured with stamped elements, whereon the supporting sub-structure (50) is mounted, and fixed on the inside of the driving sub-structure (30).

## Description

### OBJECT OF THE INVENTION

The present invention can be included in the field of thermosolar technology, more specifically, it relates to dish-type point-based solar concentration systems, in particular, although not necessarily, of dish-type, such as Stirling or AMTEC dishes.

### BACKGROUND OF THE INVENTION

A dish-type point-based solar concentration system, such as those of Stirling dish, has a parabolic concentrator which is equipped with dual-axis tracking, to reflect the incident solar radiation on the surface towards a reflective surface. A solar receiver is located on the focus, which is connected to a Stirling engine or a microturbine. The receptor absorbs the concentrated solar radiation, causing the heating of a fluid until a suitable temperature so that the energy absorbed by the fluid is used in the engine or microturbine to generate electricity, through a generator connected to the engine or microturbine shaft.

There are other dish-type concentration systems where the purpose of the fluid heated in the receiver is that of either generating process vapour or being stored.

In the case of AMTEC (alkali-metal thermal-to-electric conversion) dishes, similar to Stirling dishes, the Stirling engine is replaced by a new regenerative power conversion unit which allows the direct conversion of heat into electricity by the use of an alkaline metal.

In particular, the main components of the Stirling dish are:
- Solar concentrator (also called primary reflector): it comprises a parabolic specular surface supported by a structure. Its mission is to concentrate, theoretically in a point, which coincides with the focus of the parabolic specular surface, the solar radiation incident on the specular surface.
- Solar receiver: it is a heat exchanger which is positioned in the focus and transfers the solar energy concentrated in said focus towards a working fluid.
- Stirling engine or microturbine: it comprises an output shaft and transforms the heat absorbed by the working fluid into mechanical energy to make the output shaft rotate.

- Generator: it is coupled to the output shaft and transforms the rotation energy of the output shaft into electrical energy.
- Support structure: to support all the mentioned elements and give rigidity and resistance to the assembly.
- Tracking system: it enables orienting the assembly of the Stirling dish so that the rays always incide on the reflective surface parallel to the dish axis.

However, the concentration systems known to date have some drawbacks which we will state below.

Stirling dishes are known whose structure is anchored to the ground by a central pivot and a wheel-rail system on foundations in the form of a ring, performing the function of elevation mechanism. This configuration gives said system pointing errors from the foundation, which becomes a key step of the assembly.

Other systems comprise a pedestal several metres high whereon is disposed the concentrator structure and a truss system at which end the Stirling engine is anchored. This "point-based support" system produces a great concentration of stresses in the rotation mechanisms, largely increasing the maintenance and installation cost of the technology, also due to deformations of the pedestal throughout the day.

Another of the disadvantages that dish-type trackers have to date, and which has been an impediment for their serial production in large plants, is the great cost involved in transporting these structures, since they need a large volume in relation to the weight they support.

In short, we have the following disadvantages: heavy and complex structures, which makes the manufacturing of the structure more expensive and complex, as with the transport of the parts forming it, the assembly and the maintenance; inaccuracies in the foundations, which are transferred to the structure operation; high concentration of stresses; and lack of accuracy in the focus of the radiation concentration in the focus.

The aim is to describe a dish-type point-based solar concentration system free from the aforementioned drawbacks.

### DESCRIPTION OF THE INVENTION

The present invention resolves the aforementioned drawbacks, in accordance with a first aspect of the invention, by a structure for a dish-type point-based solar concentration system and, according to a second aspect of the invention, by a dish-type point-based solar concentration system including said structure.

The structure of the invention comprises an anchoring sub-structure designed to be anchored to the ground, preferably by piles (either of concrete or metal piles directly anchored to the ground). The anchoring sub-structure provides fixing to the ground for the structure.

It also has a tracking sub-structure, which is connected to the anchoring sub-structure in a rotatory manner with respect to said anchoring sub-structure around an azimuth axis to produce the azimuth tracking of the tracking sub-structure. By way of example, the anchoring sub-structure and the tracking sub-structure are connected through an azimuth crown comprising a casing, fixed to the anchoring sub-structure, and a toothed wheel, internal to the casing, which rotates with respect to the casing around an azimuth axis, and which is linked to the tracking sub-structure. A first engine is in charge of actuating the toothed wheel, so that the rotation of the toothed wheel with respect to the casing drives the tracking sub-structure, generating the azimuth orientation of said tracking structure.

The structure additionally comprises a driving sub-structure, comprising two coaxial hoops, located in parallel planes and connected together by means of tie-rods, and said tie-rods may be oblique and/or perpendicular to the hoops. The hoops are configured from segments which are assembled to mount each one of the hoops. Preferably, the segments are hollow profiles at the ends whereof curved bars are inserted to provide the corresponding fixing between adjacent segments.

The driving sub-structure, once assembled, comprises a receptacle in its contour to house a solar receiver, which will be in connection with a Stirling engine, a microturbine or similar, according to the second object of the invention. The driving sub-structure is linked to the tracking sub-structure, so that it is driven by the azimuth movement of said tracking sub-structure. Likewise, the driving sub-structure rotates with respect to the tracking sub-structure around the axis common to the hoops, to provide the receptacle with elevation tracking.

In particular, the structure may incorporate two pairs of slides, one for each hoop, mounted in the tracking sub-structure, to house the hoops and guide the driving structure in its elevation movement. The slides incorporate rolling elements designed to connect with the hoops, to facilitate the elevation movement.

A second engine causes the rotation of the driving sub-structure with respect to the tracking sub-structure. Preferably, the second engine attacks a transmission (for example, a chain, or a curved rack, linked to at least one of the hoops, to cause said elevation movement.

Therefore, with the movement of the tracking sub-structure by the first engine, together with the movement of the driving sub-structure by the second engine, it achieves dual-axis tracking of the receptacle designed to house the solar receiver, therefore, of the focus of concentration.

The invention also incorporates a connection sub-structure, and a supporting sub-structure, linked to the connection sub-structure, and designed to support a reflection surface in preferably paraboloid form, the focus of which coincides substantially with the receptacle, which defines the solar concentrator of a concentration system according to the second aspect of the invention, as shall be described below.

The connection sub-structure is a modular bar structure, and therefore of great rigidity, which is connected to the driving structure and is designed to support the reflective surface and the supporting sub-structure of said reflective surface.

The supporting sub-structure has the form of a cradle and is joined to the connection sub-structure.

The structure of the invention overcomes the problems of variations in the focus of the paraboloid with respect to the centre of the receiver from the foundations, thanks to a levelling device which provides a decoupling between the receiver surface and the ground, avoiding the transfer of variations of the ground to the structure. The anchoring sub-structure, with its levelling device, replaces the high pedestals of the state of the art thus avoiding the stresses generated due to the ground and the specific foundations.

On the other hand, the Stick-Slip effect is minimized thanks to the use of the slides equipped with rolling elements assisted by bearings. The rotation of the driving sub-structure is subject to greatly reduced errors, since said errors are translated into very low angular differences, due to the high diameter of the hoops. The solution provided makes it possible to dispense with support shafts of great height present in the state of the art and with the previously used system of movements and which had a high concentration of stresses.

Likewise, the driving sub-structure forms a very stable and rigid construction, ideal for housing a Stirling engine or similar with a much higher precision than that provided by other known solutions, such as, for example, the supports in the form of swan's neck, which are a great drawback in terms of vibrations, the starting torque of the engine and even its own weight, making it dimensioned with large consumption of raw materials.

The ease in the rotation of the drum, means that efficiency in engine maintenance is unbeatable, since it is placed in positions very close to the ground avoiding the use of auxiliary lifting machinery.

As previously explained, and as will become clear in the preferred embodiment explained below, both the driving sub-structure, and the connection sub-structure and the supporting sub-structure have been devised to be mounted through simple parts, preferably with a predominantly linear dimension and with the aim of favouring a transport logistics by weight and not by volume.

Said parts can be transported compactly, so that it avoids deformations which may invalidate their function and make its commissioning more expensive or even ruin it. The design has been executed with construction criteria which allows us to apply lean manufacturing techniques for its assembly, in this way achieving an assembly in a known and stable time cycle, and also its quality.

Additionally, the solution proposed on how to produce the driving, connection and supporting sub-structures from simple joints of longitudinal parts which can be stacked in simple configuration (bars or stamped parts), preferably produced in hot-galvanized steel, allows a great use of the material in relation to the resistance and rigidity obtained, and provides advantages in the transport, since the parts can be compactly packaged. Likewise, hot-galvanized steel is a widespread product which is easily acquired, whose capacity of withstanding the passage of time is widely verified.

The assembly of the connection sub-structure and of the supporting sub-structure is devised as a lean manufacturing system of great simplicity which does not require additional investments, without the need to use special tables, nor specific tools for its assembly.

The centre of gravity of the assembly of the driving, connection and supporting sub-structures is, throughout the path, at the intersection of the azimuth axis and of the axis of elevation rotation, avoiding counterweighting the system and considerably reducing the material cost in the structure and that associated to the engines, being able to use first and second engines of very low power to transfer the movement.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
- Figure 1.-: Shows a perspective view of a concentration system according to the invention.
- Figure 2.-: Shows a perspective view of the azimuth crown.
- Figure 3.-: Shows a perspective view of a preferred embodiment of the anchoring sub-structure.
- Figure 4.-: Shows a perspective view of a preferred embodiment of the tracking sub-structure.
- Figure 5.-: Shows a perspective view of a preferred embodiment of the driving sub-structure.
- Figure 6.-: Shows a detailed perspective view of a specific example of assembly of the segments forming the hoops of the driving sub-structure.
- Figure 7.-: Shows a side view of the assembly of the connection of the driving sub-structure on the tracking sub-structure.
- Figure 8.-: Shows a perspective view of a preferred embodiment of the connection sub-structure mounted on the driving sub-structure.
- Figure 9.-: Shows a perspective view of a module comprised in a preferred embodiment of the connection sub-structure.
- Figure 10.-: Shows a detailed perspective view of the join of the bars of the module of figure 8.
- Figure 11.-: Shows a perspective view of a preferred embodiment of the supporting sub-structure.
- Figure 12.-: Shows a perspective view of the supporting sub-structure of figure 11 mounted on the connection sub-structure of figure 10.
- Figure 13.-: Shows a detail of the supporting structure showing supporting profiles and clamps to fix the reflective surface.
- Figure 14.-: Shows a profile view of a detail of the assembly of the tracking sub-structure on the anchoring sub-structure.
- Figures 15a to 15c.-: Schematically show three positions of the structure, showing the ease of access to the solar receiver in the case of maintenance.
- Figure 16.-: Shows details of the clamps.

### PREFERRED EMBODIMENT OF THE INVENTION

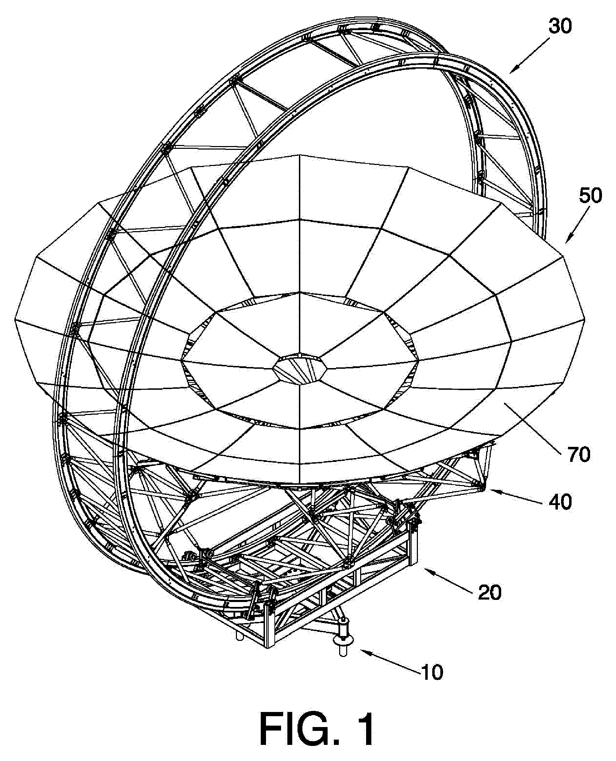

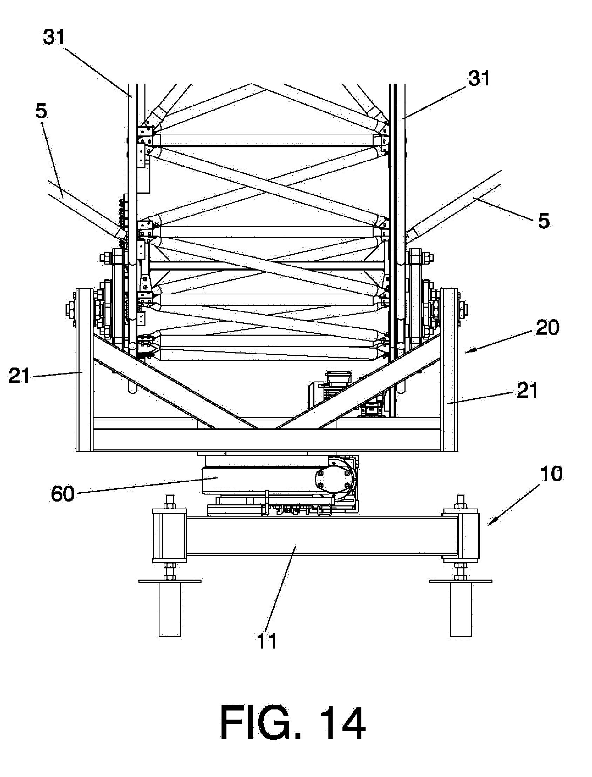

Below, a detailed description of the present invention is described with the aid of said figures 1 to 15.

Below, a list is given of the numerical references used in the description of the preferred embodiment, in correspondence with the figures.
- - 10: anchoring sub-structure
- - 11: first profiles
- - 13: bolts
- - 14: piles
- - 15: second profiles
- - 16: first plate
- - 17: upper base
- - 18: upper nut
- - 19: lower base
- - 9: lower nut
- - 20: tracking sub-structure
- - 21: posts
- - 22: second plate
- - 23: slides
- - 24: rolling elements
- - 25: chain
- - 30: driving sub-structure
- - 31: hoops
- - 32: tie-rods
- - 33: segments
- - 34: curved bars
- - 35: receptacle
- - 40: connection sub-structure
- - 41: central core
- - 42: modules
- - 43: first triangle
- - 44: first base
- - 45: first base vertices
- - 46: upper vertex
- - 47: second triangle
- - 48: second base
- - 49: second base vertices
- - 8: lower vertex
- - 7: first pairs of busbars
- - 6: second pair of busbars
- - 5: legs
- - 4: strips
- - 3: bores
- - 50: supporting sub-structure
- - 51: second core
- - 52: arms
- - 53: third plates
- - 54: clamps
- - 55: supporting profiles
- - 56: first holes
- - 57: central portion
- - 58: side profiles
- - 59: first stretch
- - 71: second stretch
- - 72: third stretch
- - 60: azimuth crown
- - 61: outer casing of the azimuth crown
- - 62: inner toothed wheel of the azimuth crown
- - 70: reflective surface

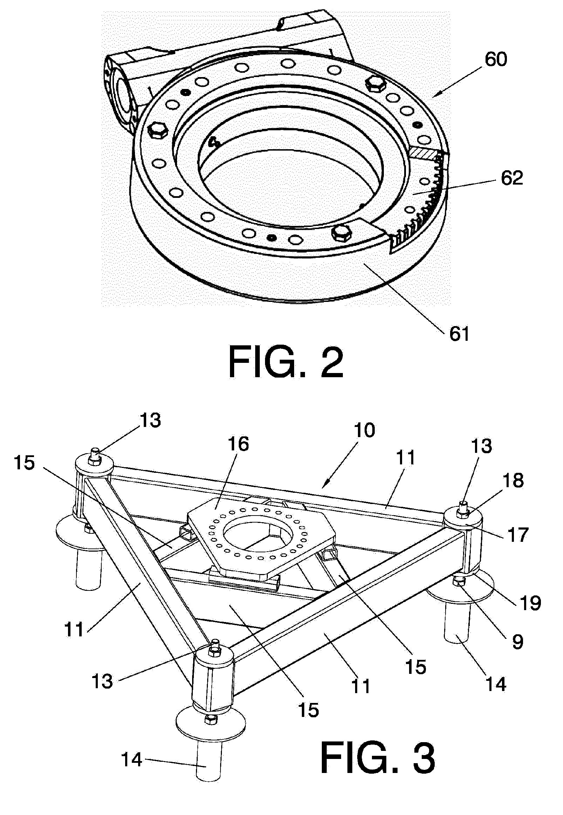

As shown in figure 1, the structure for a dish-type point-based solar concentration system according to a first aspect of the invention comprises:
- an anchoring sub-structure (10), to connect the structure to the ground;
- a tracking sub-structure (20), connected to the anchoring sub-structure (10) through (see figure 2) an azimuth crown (60) to provide the tracking sub-structure (20) with an azimuth tracking;
- a driving sub-structure (30) linked to the tracking sub-structure (20) and rotatory with respect to said tracking sub-structure (20) to provide an elevation tracking;
- a connection sub-structure (40), disposed inside the driving sub-structure (30) and fixed to said driving sub-structure (30); and
- a supporting sub-structure (50), fixed to the upper part of the connection sub-structure (40), and designed to support a reflective surface (70), with an overall paraboloid form the focus of which is in the driving sub-structure (30). The reflective surface (70) may be formed by a single reflective element, with the form of a paraboloid, or it may be formed by a plurality of reflective elements, which form a reflective surface (70) equipped with a form similar to a paraboloid. Among other options, the reflective elements may have a spherical or flat curvature.

In figure 3 it can be seen that the anchoring sub-structure (10) comprises a first triangular prism formed by three first rectangular profiles (11). Through the side edges of the first prism are disposed different bolts (13) designed to be inserted in respective piles (14) to provide fixing to the ground.

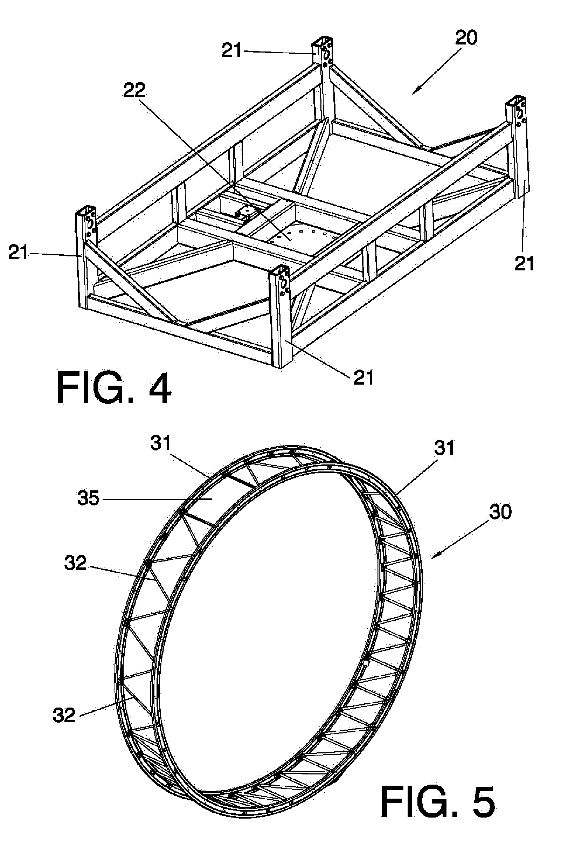

The tracking sub-structure (20), shown in figure 4, is a rectangular assembly produced with welded rectangular profiles and comprising a plurality of posts (21), preferably four posts (21) located at the ends according to a parallelepiped distribution.

The azimuth crown (60) (again see figure 2) is linked to the upper part of the anchoring sub-structure (10) and to the lower part of the tracking sub-structure (20), to provide the tracking sub-structure (20) with a rotation with respect to the anchoring sub-structure (10) around an azimuth axis. In particular, the azimuth crown (60) comprises an outer casing (61), and a toothed crown (62) disposed inside the casing (61).

Again in figure 3, it is observed that three second profiles (15) are internally welded to the first profiles (11), having a second profile (15) welded to intermediate points of each two first adjacent profiles (11). On the second profiles (15) are fixed a first plate (16) which is, in turn, fixed to the casing (61) of the azimuth crown (60).

Following with figure 4, it is observed that a second plate (22) is fixed on the lower part of the tracking sub-structure (20), and is also fixed to the toothed wheel (62) of the azimuth crown (60). In this way, it allows the assembly of the tracking sub-structure (20) on the anchoring sub-structure (10), through the azimuth crown (60) which, actuated by a first engine (not represented) allows a rotation of the tracking sub-structure (20) with respect to the anchoring sub-structure (10) according to the azimuth axis.

As shown in figure 3, the anchoring sub-structure (10) additionally incorporates a levelling device which makes it possible to regulate the height of each one of the side edges of the first prism, to obtain a vertical orientation of the azimuth axis. The levelling device comprises a lower base (19) mounted on at least one bolt (13), below the first prism, and a lower nut (9) threaded on the bolt (13) below each lower base (19). The levelling device may additionally incorporate an upper base (17) mounted on at least one of the bolts (13), above the first prism, and an upper nut (18) threaded on the bolt (13) above each upper base (17), to avoid the tracking sub-structure (20) separating from the anchoring sub-structure (10). Preferably, the bases (17, 19) and the nuts (18, 9) are mounted on thee three bolts (13). By making the lower nuts (9) rotate in one direction or the other, the lower bases (19) are raised or lowered, and therefore, also the side edges, which rest on the lower bases (19), obtaining the suitable orientation of the tracking sub-structure (20).

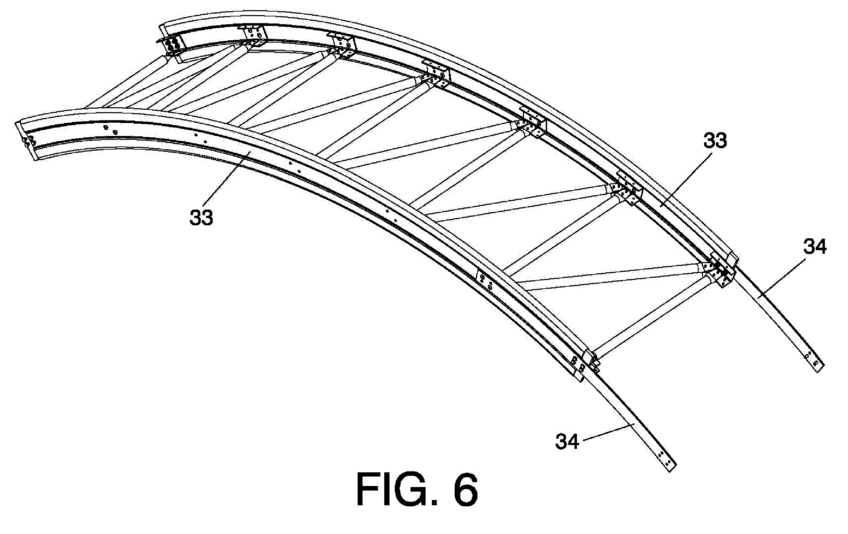

As represented in figure 5, the driving structure (30) comprises two hoops (31) disposed coaxially in parallel planes, and connected together by means of tie-rods (32). The tie-rods (32) are joined, at each one of their ends, to one of the hoops (31). The tie-rods (32) may be oblique and/or have a normal direction to both hoops (31). Each hoop (31) is materialized by means of an assembly of segments (33). According to a preferred embodiment, shown in figure 6, the segments (33) are hollow profiles, at the ends whereof curved bars (34) can be inserted to provide the corresponding fixing between adjacent segments (33).

Once assembled, the driving sub-structure (30) comprises a receptacle (35) in its contour to house a solar receiver (not represented) which can be connected to a Stirling engine or similar (not represented). The driving sub-structure (30) is connected to the tracking sub-structure (20), so that not only is it driven by the azimuth movement of said tracking sub-structure (20), but it is also rotatory with respect to the tracking sub-structure (20) around the axis common to the hoops (31), to provide the receptacle (35) with elevation tracking.

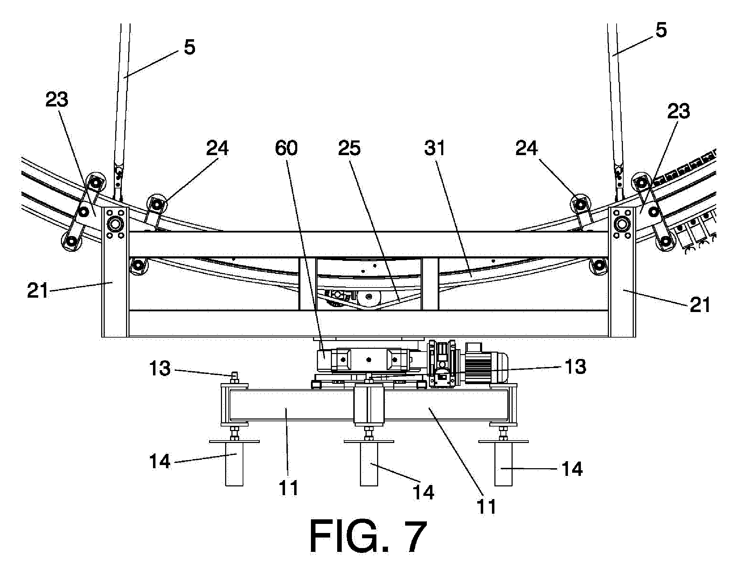

Hence, as shown in figure 7, the structure incorporates two pairs of slides (23) mounted on the posts (21) of the tracking sub-structure (20), to house the hoops (31) and guide the driving structure (30) in its elevation movement. The slides (23) incorporate rolling elements (24) designed to contact with the hoops (31), to facilitate the relative movement between the driving sub-structure (30) and the tracking sub-structure (20), which is caused by a second engine (not represented), housed in the tracking sub-structure (20), attacking a chain (25) (see figure 7) linked to one of the hoops (31), to produce said elevation movement. The slides (24) may be replaced by other elements which allow the rotation of the hoops (31), for example, rollers on bearings.

In this way, it achieves that the solar tracking system has two axes due to the combination of the azimuth rotation of the tracking sub-structure (20), and of the elevation rotation of the driving sub-structure (30).

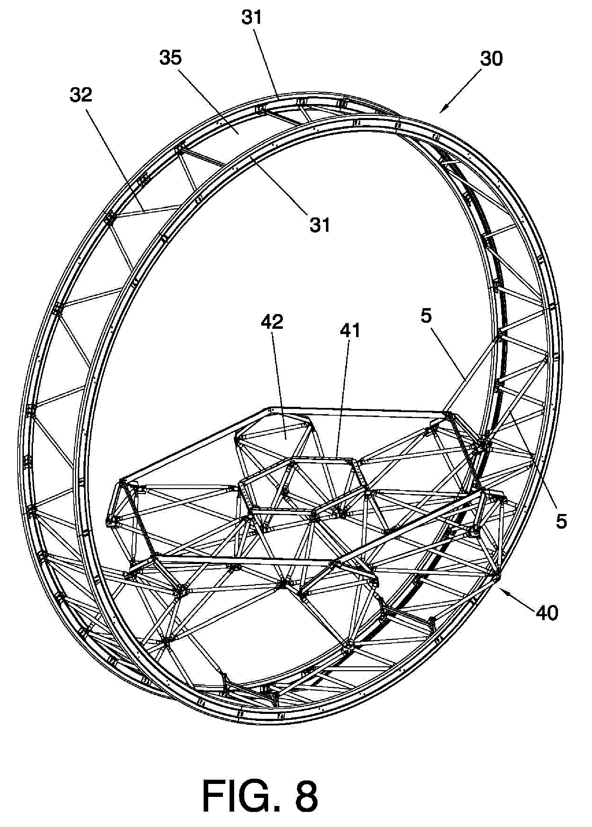

As shown in figure 8, the connection sub-structure (40) has a modular configuration and is formed by bars. According to a preferred embodiment, the connection sub-structure (40) comprises a first central core (41) in the form of a prism disposed perpendicular to the axis of the reflective surface and produced with connected bars, on which faces are joined different modules (42) also produced with connected bars.

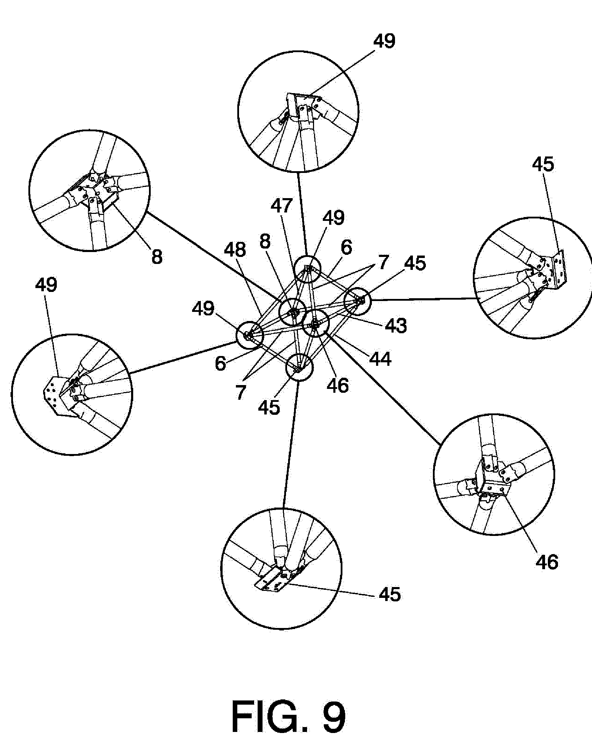

The modules (42), as shown in figure 9, are formed by twelve bars disposed as follows:
- three bars defining a first isosceles or equilateral triangle (43), and comprising:
   - a first base (44), located in the lower part and equipped with first base vertices (45); and
   - an upper vertex (46), located in the upper part, opposite the first base (44);
- another three bars defining a second inverted isosceles or equilateral triangle (47), located parallel to that of the first triangle (43) and comprising:
   - a second base (48), located in the upper part and equipped with second base vertices (49); and
   - a lower vertex (8), located in the lower part and opposite the second base (48); and
- three pairs of busbars (7, 6), where two first pairs (7) emerge one from each one of the upper (46) and lower (8) vertices and reach the base vertices (45, 49) of the other triangle (43, 47); and a second pair (6) joins each base vertex (45, 49) of each triangle (43, 47) to the closest base vertex (45, 49) of the other triangle (43, 47).

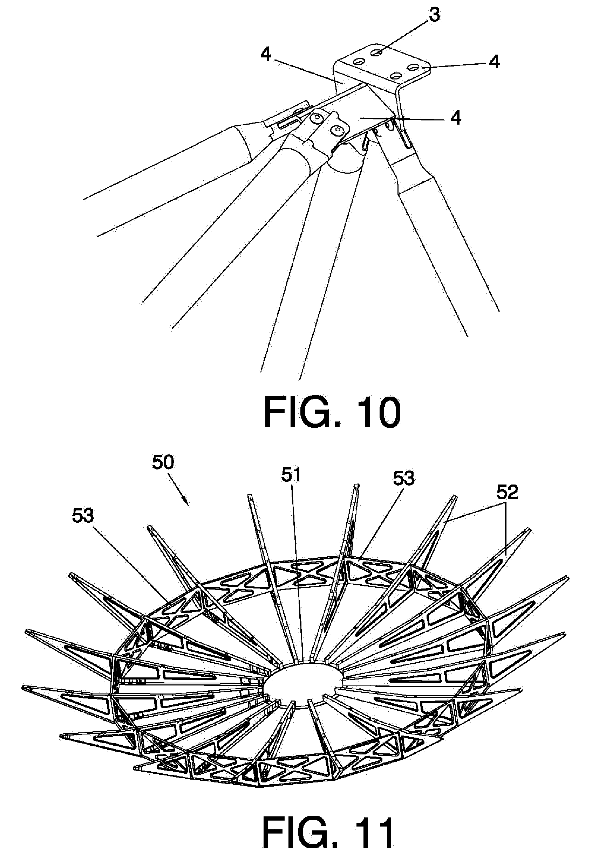

Figure 10 shows in detail a solution for joining together the bars forming a module, and for the joining of the modules to the first core (41). In particular, the joint may be made very simply, for example, by strips (4) welded together and equipped with bores (3) to screw or rivet the bars.

Each one of the first triangles (43) is connected to one of the vertices of the polygon (preferably hexagon) of the first core (41). From the modules (42) emerge legs (5) which link the connection sub-structure (40) with the hoops (31) of the driving sub-structure (30). It is preferred that the bases (44, 48) of the first (43) and second triangles (47) are located at a lower level than the upper vertices (46) of the corresponding first triangles (43), so that the connection sub-structure (40) has a concave vault-shape which optimizes the transmission of forces, especially of wind.

Figure 11 shows the supporting sub-structure (50), comprising a second circular or polygonal core (51) from which emerge radially a plurality of flat stamped arms (52) which define a cradle. A polygonal reinforcement produced with stamped hollow third plates (53) is disposed coaxially with the second core (51) and in a plane parallel to said second core (51). Two adjacent third plates (53) are joined together and also to the arms (52) at intermediate points of the arms (52) by means of rivets.

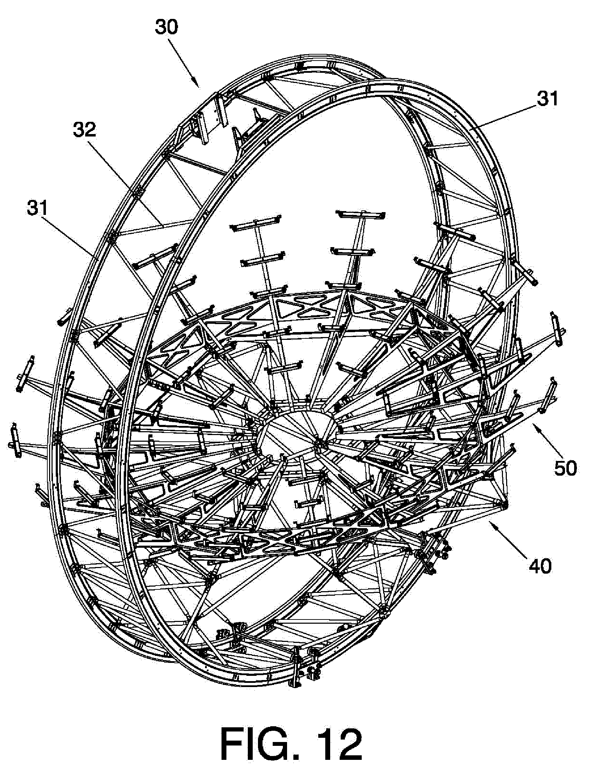

The supporting sub-structure (50) is fixed on the connection sub-structure (40), as shown in figure 12. On the supporting sub-structure (50) a reflective surface (70) (see figure 1) can be disposed, the position of the focus whereof substantially coincides with that of a solar receiver (not represented) disposed, in connection with a Stirling engine or similar, in the receptacle (35) of the driving sub-structure (30).

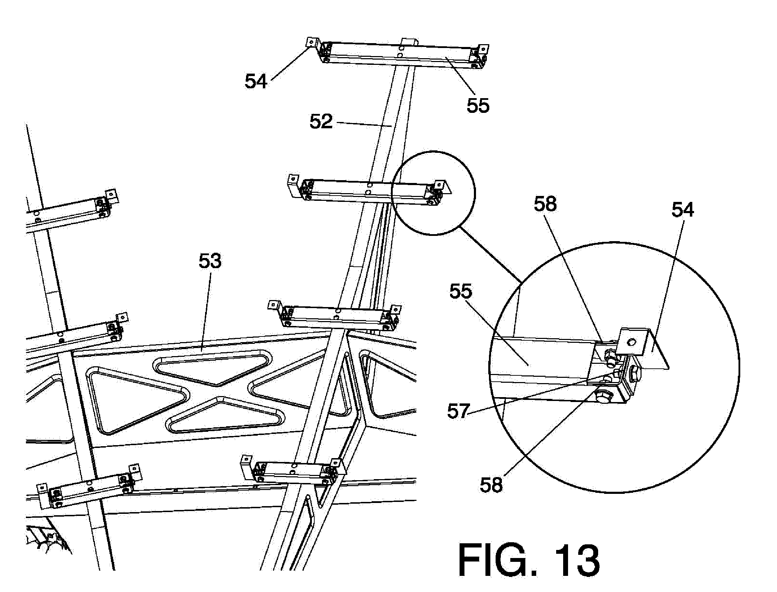

As observed in figure 13, the supporting sub-structure (50) incorporates a plurality of supporting profiles (55) resting on the arms (52), where said supporting profiles (55) incorporate first holes (56) in the ends, designed to screw U-shaped profiles comprising a central portion (57) and two side portions (58), where the central portion (57) has a second hole (not shown) to screw to the clamps (54) and the side profiles (58) are in turn perforated to be screwed to the supporting profile (55) in the first holes (56). The first holes (56) are preferably in the form of a slotted hole.

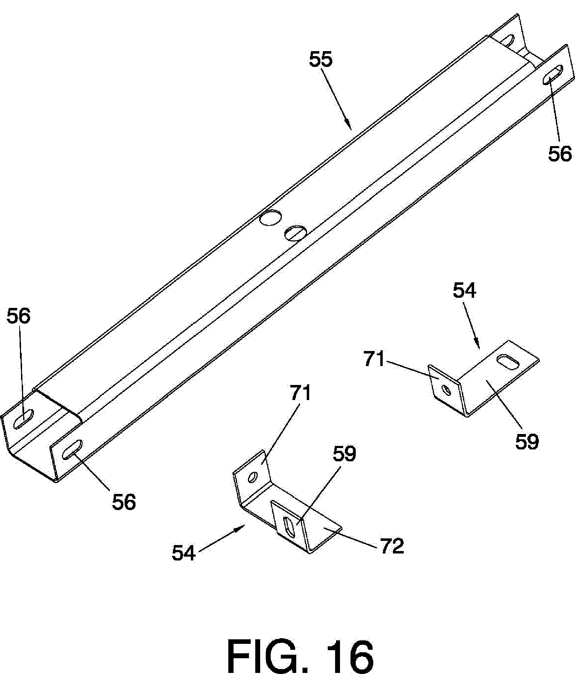

In figure 16 it is observed that the clamps (54) are preferably formed by angled metal tabs composed of several stretches (59, 71, 72). A first stretch (59) is perforated to screw to the second hole (not shown), and a second stretch (71) is perforated to screw to the reflective surface (70) through connection elements (not represented). According to a first example, the first stretch (59) and the second stretch (71) are adjacent. According to a second example, the first stretch (59) and the second stretch (71) are separated by a third stretch (72), with respect to which they are bent, one at one end and the other in a side.

For reasons of simplicity, in the figures a further two examples have not been represented which are specular images of the two stated examples.

Once the surface of the invention has been mounted, it is possible to dispose the reflective surface (70), the actuation engines, the Stirling engine or similar, and the solar receiver to obtain a dish-type point-based solar concentration system.

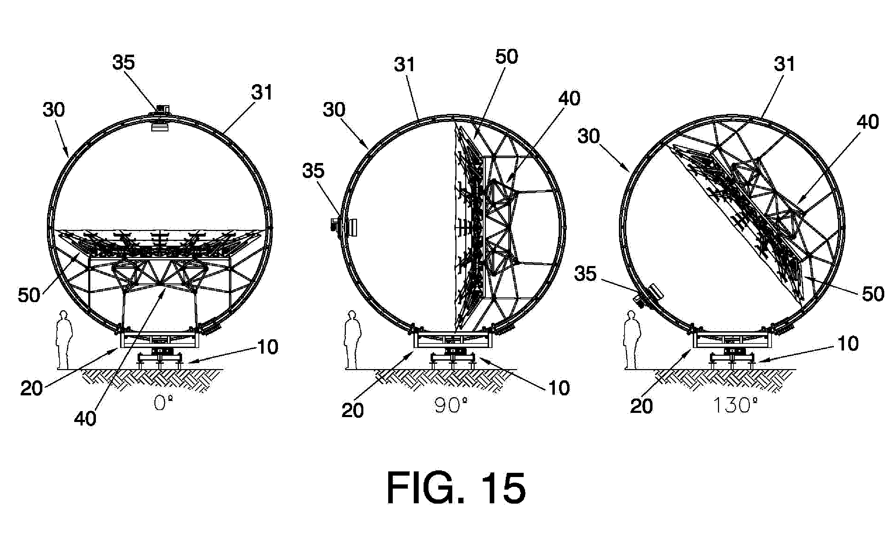

Figures 15a, 15b, 15c show the ease of access to the solar receiver and to the Stirling engine or similar, in the case of maintenance.

## Claims

1. Structure for a dish-type point-based solar concentration system, **characterized in that** it comprises:
- an anchoring sub-structure (10) for anchoring the structure to the ground;
- a tracking sub-structure (20), comprising a plurality of posts (21), and it is mounted on the anchoring sub-structure (10) in a rotatory manner with respect to said anchoring sub-structure (10) around an azimuth axis;
- a driving sub-structure (30), consisting of at least one hoop (31) to provide tracking to the sub-structure with respect to an elevation axis;
- a supporting sub-structure (50) composed of elements joined together, designed to support a reflective surface;
- a modular connection sub-structure (40), whereon the supporting sub-structure (50) is mounted, and which is fixed on the inside of the driving sub-structure (30);
where the driving sub-structure (30) is connected to the tracking sub-structure (20) in a rotatory manner on rolling elements (24) located in the posts (21), to allow an elevation rotation of the driving sub-structure (30) with respect to the tracking sub-structure (20).

2. Structure for a dish-type point-based solar concentration system, according to claim 1, wherein the driving sub-structure (30) comprises:
- two coaxial hoops (31) located in parallel planes;
- a plurality of tie-rods (32) which join the two hoops (31) together.

3. Structure for a dish-type point-based solar concentration system, according to claim 1, wherein the anchoring sub-structure (10) comprises:
- a first triangular prism formed by three first profiles (11);
- a bolt (13) located through each one of the side edges of the first prism, and designed to be inserted in respective piles (14), for anchoring the anchoring sub-structure (10) to the ground; and
- a first plate (16) fixed to the upper part of the first prism, designed to be fixed to an azimuth crown (60).

4. Structure for a dish-type point-based solar concentration system, according to any of claims 1 and 3, wherein the anchoring sub-structure (10) additionally comprises three second profiles (15) internally joined to the first profiles (11), where each second profile (15) is joined to an intermediate point of two first adjacent profiles (11).

5. Structure for a dish-type point-based solar concentration system, according to claims 3 and 4, wherein the first plate (16) is fixed on the three second profiles (15).

6. Structure for a dish-type point-based solar concentration system, according to claim 1, wherein the anchoring sub-structure (10) additionally comprises a levelling device to regulate the height of each one of the side edges of the first prism, where said levelling device comprises:
- an upper base (17) mounted on at least one bolt (13), above the first prism;
- an upper nut (18) threaded on the bolt (13) above each upper base (17);
- a lower base (19) mounted on said bolt (13), below the first prism, whereon said first prism rests; and
- a lower nut (9) threaded on the bolt (13) below each lower base (19) and in contact with said lower base (19),
so that by making the lower nuts (9) rotate the lower bases (19) are raised or lowered and, therefore, also the side edges.

7. Structure for a dish-type point-based solar concentration system, according to claim 4, wherein on each side edge there is an upper base (17) and a lower base (19) with respective upper nut (18) and lower nut (9).

8. Structure for a dish-type point-based solar concentration system, according to claim 1, wherein the tracking sub-structure (20) is a rectangular assembly produced with joined profiles which is fixed in its lower part to a second plate (22) designed to be fixed to a lower toothed wheel (62) comprised in an azimuth crown (60).

9. Structure for a dish-type point-based solar concentration system, according to claim 2, wherein the hoops (31) are formed by assembled segments (33).

10. Structure for a dish-type point-based solar concentration system, according to claim 9, wherein the segments (33) are hollow profiles, where the driving sub-structure (30) additionally incorporates curved bars (34) inserted in the ends of the segments (33) to provide fixing between adjacent segments (33).

11. Structure for a dish-type point-based solar concentration system, according to any of claims 1, 2, 9 and 10, wherein the driving sub-structure (30) comprises a receptacle (35) designed to house a solar receiver.

12. Structure for a dish-type point-based solar concentration system, according to claim 1, wherein the connection sub-structure (40) comprises:
- a first central core (41) in the form of a prism disposed substantially perpendicular to the axis of the reflective surface (70) and produced with connected bars; and
- a plurality of modules (42) produced with connected bars, said modules (42) being joined to the side faces of the first core (41).

13. Structure for a dish-type point-based solar concentration system, according to claim 12, wherein the modules (42) comprise:
- a first isosceles or equilateral triangle (43), and comprising:
- a first base (44) located in the lower part and equipped with first base vertices (45); and
- an upper vertex (46), located in the upper part, opposite the first base (44);
- a second isosceles or equilateral triangle (47), located parallel to that of the first triangle (43) and comprising:
- a second base (48) located in the upper part and equipped with second base vertices (49); and
- a lower vertex (8), located in the lower part and opposite the second base (48);
- three pairs of busbars (7, 6), where two first pairs (7) emerge one from each one of the upper (46) and lower (8) vertices and reach the base vertices (45, 49) of the other triangle (43, 47); and a second pair (6) joins each base vertex (45, 49) of each triangle (43, 47) to the closet base vertex (45, 49) of the other triangle (43, 47); and
- legs (5) which emerge from the modules (42) to connect the connection sub-structure (40) to the driving sub-structure (30).

14. Structure for a dish-type point-based solar concentration system, according to claim 13, wherein the bases (44, 48) of the first (43) and second triangles (47) are located at a lower level than the upper vertices (46) of the corresponding first triangles (43).

15. Structure for a dish-type point-based solar concentration system, according to claim 1, wherein the supporting sub-structure (50) comprises:
- a second circular or polygonal core (51);
- a plurality of arms (52) which emerge from the second core (51) and which define a cradle; and
- a polygonal reinforcement, produced with third plates (53) and disposed coaxially with the second core (51) and in a plane parallel to said second core (51),
where the third plates (53) are joined together and also to the arms (52) in intermediate points of the arms (52), or
alternatively the arms (52) comprise intermediate cavities wherein are inserted the third plates (53).

16. Structure for a dish-type point-based solar concentration system, according to claim 15, wherein the polygonal reinforcement, is disposed at an upper level of the second core (51),

17. Structure for a dish-type point-based solar concentration system, according to any of the preceding claims, additionally comprising an azimuth crown (60) located between the anchoring sub-structure (10) and the tracking sub-structure (20), where the azimuth crown (60) comprises:
- an outer casing (61) linked to the upper part of the anchoring sub-structure (10); and
- a toothed crown (62) located inside the casing (61), and linked to the lower part of the tracking sub-structure (20), to provide the tracking sub-structure (20) with a rotation with respect to the anchoring sub-structure (10) around an azimuth axis.

18. Structure for a dish-type point-based solar concentration system, according to claim 17 wherein the first plate (16) of the anchoring sub-structure (10) is fixed to the casing (61) of the azimuth crown (60), and the second plate (22) of the tracking sub-structure (20) is fixed to the toothed wheel (62) of the azimuth crown (60).

19. Structure for a dish-type point-based solar concentration system, according to any of the preceding claims, comprising four posts (21) located at the ends of the tracking sub-structure (20) in parallelepiped distribution, where in the upper ends of the posts (21) are mounted the rolling means (24) to allow the elevation rotation of the driving sub-structure (30) with respect to the tracking sub-structure (20) around the common axis of the coaxial hoops (31).

20. Structure for a dish-type point-based solar concentration system, according to claim 19, wherein the upper ends of the posts (21) incorporate different slides (23) comprising the rolling means (24).

21. Structure for a dish-type point-based solar concentration system, according to any of the preceding claims, wherein the supporting sub-structure (50) additionally incorporates:
- a plurality of supporting profiles (55) resting on the arms (52), and
- clamps (54) located at the ends of the supporting profiles (55), to fix the reflective surface (70) to the supporting sub-structure (50).

22. Structure for a dish-type point-based solar concentration system, according to claim 21, wherein the supporting profiles (55) incorporate first holes (56) in the ends, designed to screw U-shaped profiles comprising a central portion (57) and two side portions (58), where the central portion (57) has a second hole (not shown) to screw to the clamps (54) and the side profiles (58) are perforated to be screwed to the supporting profile (55) in the first holes (56).

23. Structure for a dish-type point-based solar concentration system, according to claim 22, wherein the clamps (54) are formed by angled metal tabs composed of several stretches (59, 71, 72), where a first stretch (59) is perforated to screw to the second hole, and a second stretch (71) is perforated to screw to the reflective surface (70).

24. Structure for a dish-type point-based solar concentration system, according to claim 23, wherein the first stretch (59) and the second stretch (71) are adjacent.

25. Structure for a dish-type point-based solar concentration system, according to claim 23, wherein the first stretch (59) and the second stretch (71) are separated by a third stretch (72), with respect to which they are bent, one in an end and another in a side.

26. Structure for a dish-type point-based solar concentration system, according to any of the preceding claims, wherein at least one of the hoops (31) additionally incorporates a chain (25) which can be actuated to produce the elevation rotation of the structure.

27. Dish-type point-based solar concentration system, comprising the structure described in any of the preceding claims, additionally comprising:
- a first engine to actuate the azimuth crown (60);
- a second engine, housed in the tracking sub-structure (20), to actuate the elevation movement of the driving sub-structure (10);
- a solar receiver located in the receptacle (35) of the driving sub-structure (30), and connected to a Stirling engine, or a microturbine; and
- a reflective surface, resting on the supporting sub-structure (50).

28. Dish-type point-based solar concentration system, according to claim 27, wherein the reflective surface (70) has the form of a dish.
